# EUROPÄISCHE PATENTSCHRIFT

(11) **EP 2 182 122 B1**
(45) Veröffentlichungstag und Bekanntmachung des Hinweises auf die Patenterteilung: **14.12.2011**
(21) Anmeldenummer: 09174966.3
(22) Anmeldetag: 03.11.2009
(51) Int. Cl.: E03C 1/042, F16K 11/20, F16K 11/22

(54) **Aufputz-Brausearmatur**
Surface mounted shower mixer
Armature de pomme à prise de contact en saillie

(30) Priorität: 04.11.2008 DE 102008055781
(43) Veröffentlichungstag der Anmeldung: 05.05.2010
(73) Patentinhaber: Kludi GmbH & Co. KG, 58706 Menden (DE)
(72) Erfinder: Wiesendahl, Guido, 58099 Hagen (DE); Katzer, Dieter, 49401 Damme (DE)
(74) Vertreter: Tarvenkorn, Oliver

(56) Entgegenhaltungen:
- DE-A1- 3 941 106
- DE-U1- 9 007 655
- GB-A- 1 142 792
- US-A1- 2009 094 737

## Beschreibung

Die Erfindung betrifft eine Aufputz-Brausearmatur mit wenigstens einem Gehäuse mit einem Warmwasserzulauf, einem Kaltwasserzulauf und einem Mischwasserauslauf und mit einer Absperrventileinheit zum Absperren des Mischwasserauslaufs und einer Mischventileinheit, wie Z.B. in DE 90 07655U1 Offenbart ist.

Brausearmaturen für die Aufputzmontage werden meist als langgestreckter, insbesondere zylindrischer Körper ausgebildet. Das Gehäuse ist aus Gussmetall gebildet. Um die wasserführenden Kanäle sowie Aufnahmen für Absperrventile und/oder Thermostatventileinheiten auszubilden, muss beim Gießen mit zahlreichen Kernen gearbeitet werden, so dass die Fertigung aufwendig und kostenintensiv ist.

Zudem ist das sogenannte Stichmaß, also der Achsabstand der beiden Anschlüsse für die Wasserleitungen, fest vorgegeben. Bauseitige Maßabweichungen können nur durch Zwischenstücke zwischen den Wandanschlüssen und der Armatur kompensiert werden, wodurch die Armatur aber weiter von der Wand absteht.

Aus der DE 90 07 655 U1 ist eine gattungsgemäße Aufputz-Brausearmatur bekannt. Hierbei wird eine innen liegende Mischventileinheit von einem zweiteiligen Gehäuse umschlossen. Allerdings sind die Stoßkanten, an denen die Halbschalen aneinanderliegen, sichtbar, was optisch störend wirkt. Außerdem können sich an diesen Kanten Schmutzreste und Kalk ablagern. Eine Verstellbarkeit des Stichmaßes ist nicht offenbart.

Aufgabe der nachfolgenden Erfindung ist es somit, eine einfachere und kostengünstigere Fertigungsweise für eine Aufputz-Brausearmatur anzugeben, bei der das Stichmaß der Anschlüsse einstellbar ist.

Gelöst wird diese Aufgabe durch eine Aufputz-Brausearmatur mit einem Mischventil mit den Merkmalen des Anspruchs 1.

Die Einsatzelemente können kostengünstig gefertigt werden, wobei dann auch zugleich die Anschlussstutzen für den Anschluss an das Rohrnetz mit angeformt werden, beispielsweise in Form eines Gewindenippels mit gängigem Außengewinde. Eine insbesondere metallische Außenhülle in Form eines Rohrstücks mit axialen Schlitzen, die sich an beiden Enden ein Stück ins Innere erstrecken, ist aus optischen Gründen bevorzugt gewählt, da verchromte Metalloberflächen bei Sanitärarmaturen als Standard angesehen werden und im längeren Betrieb besser haltbar und leichter zu reinigen sind. Durch das Prinzip des seitlichen axialen Einschiebens der Einsätze und deren Verbindung im Inneren des Gehäuses ist es leicht möglich, während der Montage das Stichmaß einzustellen. Für den Benutzer ist bei der montierten Armatur nicht erkennbar, dass es sich eben nicht um ein massives Metallgussteil handelt, denn nur die metallische Rohrhülse ist sichtbar, die endseitig die an sich bekannten Griffstücke für die Ventil- oder Thermostatbedienung aufweist.

Die Fertigungsweise ist besonders einfach: Es werden lediglich die beiden Einsatzelemente von den jeweiligen Endseiten des Gehäuses eingeschoben. Beide weisen Kanäle auf, um die eine Wasserzulaufleitung - bei der Ausführungsform mit einem Mischventil - längs des Gehäuses zur Misch- oder Thermostatventileinheit zu führen und von dort das Mischwasser wieder zur anderen Gehäuseseite zu leiten, wo sich eine Absperrventileinheit befindet.

Bevorzugt wird nach der Erfindung die Verbindung der Einsatzelemente im Inneren des Gehäuses dadurch bewirkt, dass Rohrelemente in eines der Einsatzelemente eingesetzt oder eingespritzt sind, von denen jeweils ein Stück übersteht, so dass sie in das jeweils andere Einsatzelement eingeschoben werden können. Beim Einschieben der Einsatzelemente in das Gehäuse werden die Einsatzelemente also automatisch durch die starren Rohrelemente miteinander verbunden.

Alternativ ist eine Verbindung über flexible Schläuche möglich. Die zur Montage benötigte Länge der Schläuche ist größer als die für den Betriebszustand benötigte Länge. Das Übermaß kann in einem Zwischenraum zwischen den Einsatzelementen in Form einer Schleife untergebracht werden.

Vorzugsweise bestehen die Einsatzelemente aus Kunststoff und können im Spritzgussverfahren kostengünstig gefertigt werden. Durch die Verwendung von Kunststoff wird auch eine thermische Entkopplung zwischen den Heißwasser führenden Kanälen und der Gehäuseoberfläche bewirkt.

Neben dem Vorteil der einfachen Montage und der besseren Wärmeisolierung haben die mit den Anschlussstutzen einteilig ausgebildeten Einsatzelemente den weiteren Vorteil, dass aufgrund der einteiligen Ausbildung überhaupt erst eine Fertigung der inneren Elemente aus Kunststoff möglich ist. Ein Einschrauben z. B. von metallischen Gewindenippeln in einen inneren Kunststoffkörper wäre mangels ausreichender Wandstärke des Kunststoffkörpers nicht möglich, so dass als weiterer Vorteil bei der Erfindung hinzukommt, dass die Montage von Gewindenippeln oder andersartig ausgebildeten Anschlussstutzen in einem separaten Arbeitsgang entfallen kann.

Ein weiterer Vorteil der Erfindung liegt darin, dass die Armatur nach dem Abnehmen von der Wand ganz einfach dadurch zerlegt werden kann, dass das jeweilige Einsatzelement an dem Anschlussstutzen gefasst und dann nach außen gezogen wird. Es müssen keine Sprengringe oder dergleichen gelöst werden. Die axiale Festlegung der Einsätze innerhalb des Gehäuses erfolgt durch die Verschraubung mit der Wandinstallation.

Da die Rohrelemente und die Bohrungen am gegenüberliegenden Kunststoffeinsatzelement vorzugsweise mit Überlänge ausgebildet sind, können bei Verwendung einer erfindungsgemäßen Brausearmatur mehrere Millimeter Toleranz im Abstand der wandseitigen Rohranschlüsse ausgeglichen werden.Für den Toleranzausgleich ist es vorteilhaft, wenn die Handgriffe, über die die Ventileinheiten bedient werden, an ihrem dem Gehäuse zugewandtem Ende hohlzylindrisch bzw. rohrförmig ausgebildet sind und der Innendurchmesser des rohrförmigen Abschnitts der Handgriffe größer ist als der Außendurchmesser des Gehäuses. Dadurch können die Handgriffe die Gehäuse-Enden umfassen, so dass von außen nicht sichtbar ist, ob der Kunststoffeinsatzkörper ganz bis zum Anschlag in das Gehäuse eingeschoben ist oder zwecks Toleranzausgleich etwas aus diesem herausragt.

Weitere Varianten der erfindungsgemäßen Aufputz-Brausearmatur betreffen die Anordnung des Mischwasserventilauslaufs:
- Aus optischen Gründen wird meist eine zentrierte Anordnung eines Auslaufanschlussstutzens, z.B. in Form eines Gewindenippels, an der Gehäuseunterseite bevorzugt, wo dann ein Brauseschlauch befestigt werden kann. Für diese Anordnung würden die Kunststoffeinsatzelemente nur so lang ausgebildet, dass sie einen axialen Abstand zueinander wahren, wenn sie vollständig in die Rohrhülse eingeschoben sind. Es bildet sich somit ein zentraler Raum, durch den Mischwasser fließt. Die Rohrelemente, die das Wasser von einem Einsatzkörper auf den anderen überleiten bzw. das Mischwasser wieder zurück leiten, durchkreuzen die innere Kammer, die zwischen den beabstandeten Stirnseiten der Einsatzelemente gebildet ist, so dass die Rohrelemente im Betrieb von Mischwasser umspült werden. Der Anschluss des Brauseschlauches erfolgt in herkömmlicher Weise an einer entsprechenden Gehäusebohrung im Bereich der zentralen Kammer.
- Eine besonders kostengünstige Ausbildung der Erfindung besitzt einen weiteren Gewindenippel für den Mischwasserauslauf, der direkt an denjenigen Kunststoffeinsatzkörper angeformt ist, der das Absperrventil trägt. Hierbei ist eine weitere Kammer vorgesehen, die beispielsweise als ein Ringraum ausgebildet ist, welcher das Absperrventil umschließt und von welchem aus sich ein Kanal zum Abgangsnippel für das Mischwasser erstreckt. Bei dieser Ausführungsform ist an dem einen Ende der Rohrhülse, welche das Gehäuse bildet, ein zweiter Schlitz vorhanden, so dass das Kunststoffeinsatzelement mit seinen beiden Gewindenippeln problemlos in die Rohrhülse eingeschoben werden kann.
   Um ein unbeabsichtigtes Herausgleiten der Einsatzelemente aus dem Gehäusekörper vor der Montage zu verhindern, können jedoch Zapfen oder dergleichen vorgeseher sein, über welche die beiden Einsatzelemente im Inneren des Gehäuses miteinander verbunden werden. Die Haltekräfte solcher Zapfen bzw. die Klemmkräfte, die durch die kcmprimierten Ringdichtungen an den Rohrelementen vorgerufen werden, sind vorzugsweise so gewählt, dass eine leichte Demontage möglich ist.

Die Erfindung wird nachfolgend mit Bezug auf die Zeichnungen näher erläutert. Die Figuren zeigen in Einzelnen:
- Fig. 1a, 1b: Aufputz-Brausearmaturen in verschiedenen Ausführungsformen, jeweils in Ansicht von der Rückseite;
- Fig. 2: eine perspektivische Ansicht einer aufge- schnittenen Brausearmatur; und
- Fig. 3a, 3b: verschiedene Ausführungsformen der Brause- armaturen im Schnitt.

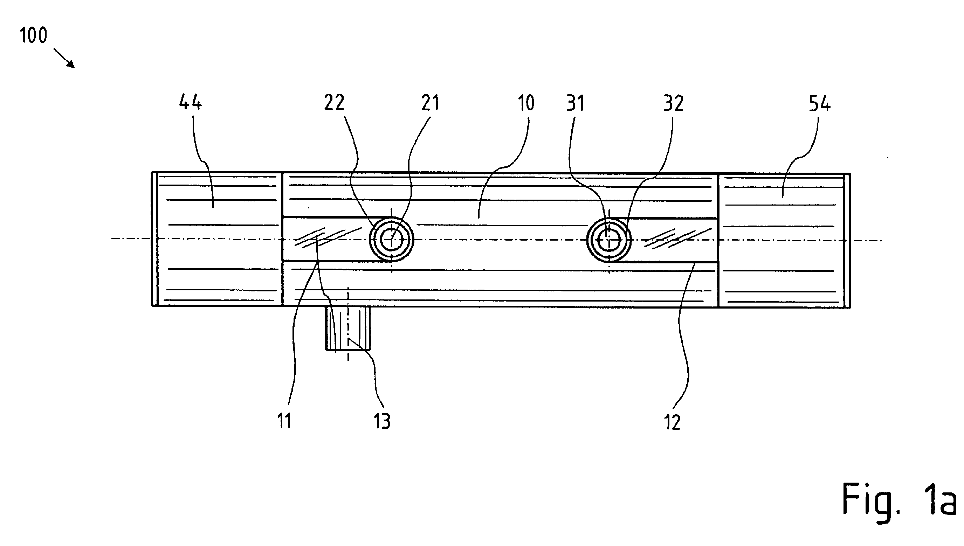

Fig. 1a zeigt eine Aufputz-Brausearmatur 100 von der Rückseite her, entsprechend einer Ansicht von der Wandseite her auf eine montierte Armatur.

Beidseits eines Gehäuses 10 sind Handgriffstücke 44, 54 angeordnet, mit denen eine Mischereinheit, insbesondere eine Thermostatventileinheit, bzw. eine Absperreinheit betätigt werden kann. Gut erkennbar in dieser Ansicht sind die seitlichen Schlitze 11, 12 in dem nach Art einer Rohrhülse ausgebildeten Gehäuse 10, sowie die in den Schlitzen 11, 12 geführten Gewindenippel 22, 32 für eine Kalt- bzw. Warmwasserzulaufleitung 31, 21. An der Unterseite des Gehäuses 10 ist ein weiterer Gewincenippel 13 ausgebildet, an dem ein Brauseschlauch oder dergleichen befestigt werden kann.

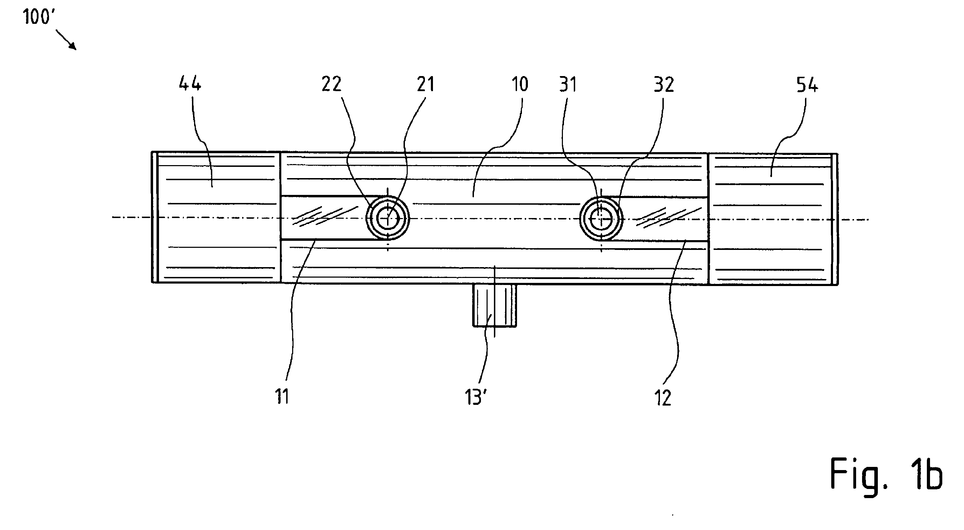

Fig. 1b zeigt eine Brausearmatur 100', die zur Ausführungsform nach Fig. 1b weitgehend identisch ist. Lediglich der Anschlussnippel 13' für den Mischwasserabgang ist mittig am Gehäuse 10 angeordnet.

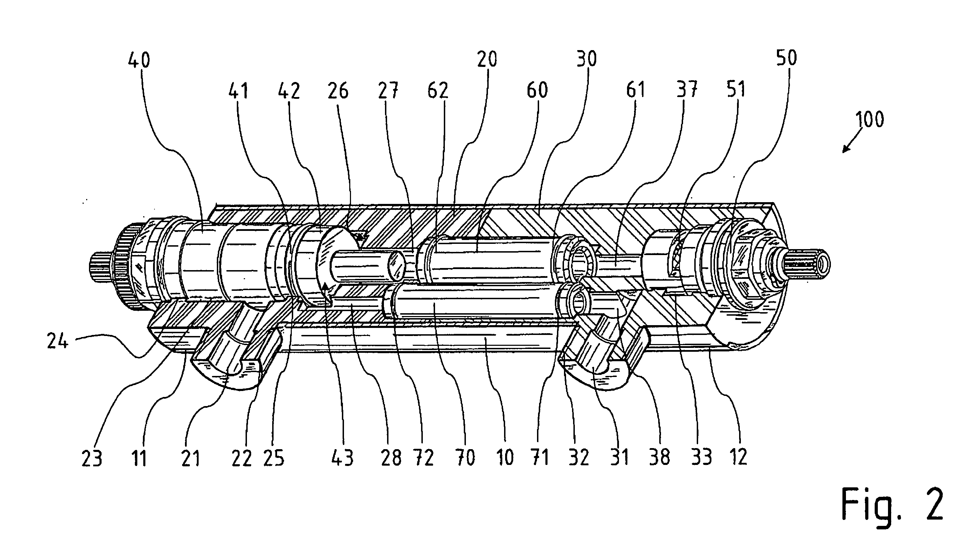

In Fig. 2 ist das Gehäuse 10 der Brausearmatur 100 aus Fig. 1a zusammen mit darin eingesetzten Kunststoffeinsatzelementen 20, 30 in einer durch die Gewindenippel 22, 32 laufenden Durchmesserebene geschnitten.

In den in Fig. 2 links angeordneten Kunststoffeinsatzkörper 20 ist eine Thermostatventileinheit 40 eingesetzt; in den rechten Einsatzkörper 30 ist eine Absperrventileinheit 50 eingesetzt.

Wie insbesondere ganz rechts unten in der Darstellung erkennbar ist, sind die Kunststoffeinsatzelemente 20, 30 im Bereich der Schlitze 11, 12 am Gehäuse 10 etwas erhaben ausgebildet, und zwar um die Wandstärke des zylinderrohrförmigen Gehäuses, so dass sich auch seitlich von den Gewindenippeln 22, 32 eine bündige Oberfläche mit der Außenseite des Gehäuses ergibt.

Das linke Kunststoffeinsatzelement 20 besitzt einen Vorsprung 24 zur axialen Festlegung des Thermostatventils 40. An einen weiteren Vorsprung 25 legt sich eine Ringdichtung 41 des Thermostatventils 40 an, wodurch die Zufuhr des Warmwassers unterbunden ist. Kaltwasser tritt durch die Zulaufleitung 21 in das Einsatzelement 20 ein und gelangt in einen Ringraum 23, der das Thermostatventil 40 umschließt. Das Kaltwasser kann über den Absatz 25 hinweg strömen und gelangt dann in einen Mischwasserkanal 27 im linken Einsatzelement 20. Von dort wird es durch ein Rohrelement 60 in das rechte Einsatzelement 30 übergeleitet und fließt durch einen Mischwasserkanal 37 zu einer Absperrventileinheit 50.

Ist die Absperrventileinheit 50 entsprechend betätigt worden, kann das Mischwasser durch eine schlitzförmige Ausnehmung 51 in einen Ringraum 33 strömen und von dort zu dem Auslaufnippel 13.

Das Rohrelement 60 besitzt an seinen beiden Enden jeweils Ringdichtungen, 61, 62, welche gegenüber den Mischwasserkanälen 27, 37 eine Abdichtung bewirken.

In gleicher Weise erfolgt der Übergang von Warmwasser von dem rechten Gewindenippel 32 über einen Warmwasserkanal 38, ein Rohrelement 70 und einen Warmwasserkanal 28 zu dem Thermostatelement 40. Auch das Rohrelement 70 besitzt endseitig Ringdichtungen 71, 72 zur Abdichtung gegenüber den Kaltwasserleitungen 28, 38 in den Kunststoffeinsatzelementen 20, 30.

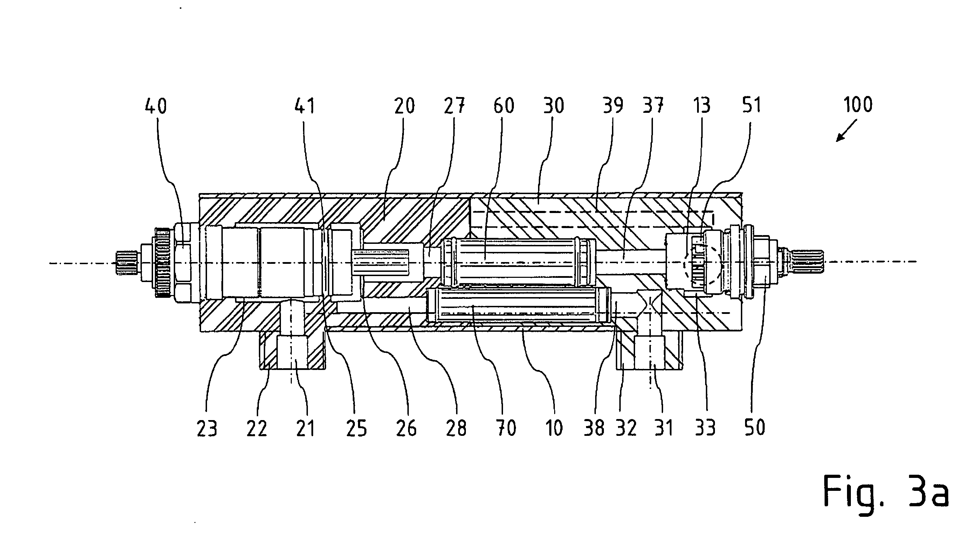

Fig. 3a zeigt einen Schnitt entsprechend der Ausführungsform nach Fig. 1a und Fig. 2, also eine plane Draufsicht auf die Schnittebene entsprechend Fig. 2. Gut erkennbar ist hier der Ringraum 23, der das Thermostatventilelement 40 umgibt, sowie die Ringdichtung 41, die gegenüber dem Absatz 25 im Einsatzelement 20 abdichtet. Die Stirnseite 43 des Kolbens des Thermostatventils 40 kann in eine kompatible Aufnahme 26 im Einsatzelement 20 einfahren. Dies ist bei maximaler Ausdehnung des Thermostatventilelements 40 möglich, die dann eintritt, wenn der Kaltwasserzulauf unterbrochen ist. Das Thermostatventil dichtet den Mischwasserkanal 27 ab, so dass Heißwasser nicht mehr ungehindert und ungemischt in den Mischwasserkanal strömen kann und ein Verbrennungsrisiko des Benutzers minimiert wird.

Im rechten Bereich der Brausearmatur 100 ist durch die gestrichelte Kreislinie die Lage eines Auslaufnippels 13 angedeutet, welcher unterhalb des Absperrventils 50 angeordnet ist. Bei geöffnetem Ventil tritt das Mischwasser an der schlitzförmigen Ausnehmung 51 im Außenmantel des Absperrventils 50 aus und gelangt in den Ringraum 33 und von dort zu dem Auslaufnippel 13.

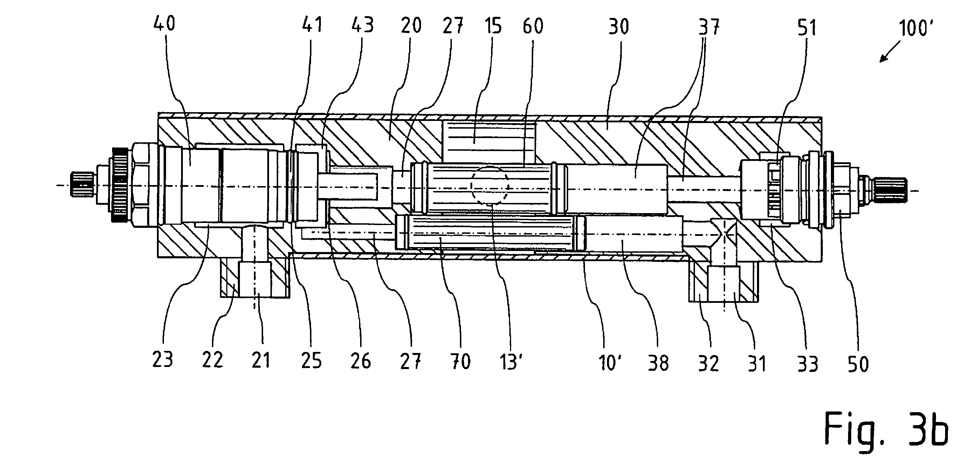

Fig. 3b zeigt eine Ausführungsform einer Aufputz-Brausearmatur 100', bei der der Auslaufnippel 13', wie in Fig. 1b auch, zentral angeordnet ist. Der Mischwasserauslauf erfolgt hier aus einer inneren Kammer 15 heraus, welche zwischen den Einsatzelementen 20, 30 ausgebildet ist. Es handelt sich hierbei um dieselben Einsatzelemente 20, 30, wie bei der zuvor beschriebenen Ausführungsform 100.

Bei der in Fig. 3b dargestellte Ausführungsform einer Brausearmatur 100' ist lediglich ein längeres Gehäuse 10' gewählt worden, so dass die Einsatzelemente 20, 30 nicht mehr direkt stirnseitig voreinander liegen, sondern mit der umgebenden Rohrhülse, die innere Kammer 15 ausbilden. Auch die Rohrelemente 60, 70 entsprechen denjenigen bei der Ausführungsform nach den Fig. 1a, 2 und 3a verwendeten Elementen. Lediglich der zur Aufnahme der Rohrelemente 60, 70 vorgesehene Längenbereich der Bohrungen 37, 38 ist nicht vollständig ausgeschöpft; die Abdichtung der Ringdichtungen 62, 72 erfolgt vielmehr schon in einem vorderen Bereich dieser Bohrungen.

Um das Mischwasser von dem Ringraum 33 im Bereich des Absperrventils 50 in die Kammer 15 hineinzuleiten, ist im rechten Einsatzelement 30 eine zusätzliche Bohrung 39 vorgesehen, die mit dem Ringraum 33 und der Kammer 15 in Verbindung steht. Diese Bohrung 39 kann speziell für die Ausführungsform der Armatur 100' nachträglich in den Einsatzkörper 30 eingebracht werden.

Sie kann aber auch von vornherein bei dem Einsatzkörper 30 vorgesehen sein und würde dann bei der Ausführungsform der Armatur 100 gemäß den Fig. 2 und 3 mit einem Stopfen verschlossen, wodurch sie ungenutzt bleibt.

## Patentansprüche

1. Brausearmatur (100; 100'), mit wenigstens:
- einem Gehäuse (10) mit einem Warmwasserzulauf (21), einem Kaltwasserzulauf (31) und einem Mischwasserauslauf (13; 13'),
- einer Absperrventileinheit (50) zum Absperren des Mischwasserauslaufs (13; 13') und
- einer Mischventileinheit (60);
**dadurch gekennzeichnet, dass** die Ventileinheiten (50, 60) jeweils in einem Einsatzelement (20, 30) gelagert sind, welche jeweils wenigstens einen angeformten Anschlussstutzen (22, 32) aufweisen, und dass das Gehäuse (10; 10') als eine Rohrhülse ausgebildet ist, die an beiden Enden jeweils wenigstens einen sich axial erstreckenden Schlitz (11, 12) aufweist, in welchem jeweils einer der Anschlussstutzen (22, 32) aufgenommen ist.

2. Brausearmatur (100; 100') nach Anspruch 1, **dadurch gekennzeichnet, dass** die Einsatzelemente (20, 30) sich axial erstreckende Wasserleitungskanäle (27, 28, 37, 38) aufweisen und die Wasserleitungskanäle (27, 28, 37, 38) der Einsatzelemente (20, 30) über gemeinsame Rohrelemente (60, 70) miteinander verbunden sind.

3. Brausearmatur (100) nach Anspruch 1 oder 2, **dadurch** gekenntzeichnet, dass die Mischventileinheit eine Thermostatventileinheit (60) ist.

4. Brausearmatur (100) nach einem der Ansprüche 1 bis 34, **dadurch gekennzeichnet, dass** die Einsatzelemente (20, 30) aus Kunststoff gebildet sind.

5. Brausearmatur (100) nach einem der Ansprüche 1 bis 4, **dadurch gekennzeichnet, dass** die Anschlussstutzen als Gewindenippel (22, 32) ausgebildet sind.

6. Brausearmatur (100) nach einem der Ansprüche 1 bis 5, **dadurch gekennzeichnet, dass** die Rohrelemente (60, 70) jeweils im Bereich beider Enden wenigstens eine Ringdichtung (61, 62, 71, 72) aufweisen.

7. Brausearmatur nach einem der Ansprüche 1 bis 6, **dadurch gekennzeichnet, dass** die Rohrelemente jeweils mit einem Ende in einem der Einsatzelemente eingespritzt sind und an dem jeweils anderen Ende wenigstens eine Ringdichtung aufweisen.

8. Brausearmatur (100') nach einem der Ansprüche 1 bis 7, **dadurch gekennzeichnet, dass** in dem Gehäuse (10) zwischen den Einsatzelementen (20, 30) eine Kammer (15) ausgebildet ist, welche mit einem Auslaufstutzen (13') verbunden ist und durch welche die Rohrelemente (60, 70) hindurch laufen, wobei in einem Einsatzelement (30) wenigstens eine Auslaufleitung (39) von der Ausgangsseite des Absperrventils (50) in die Kammer (15) führt.

9. Brausearmatur (100) nach einem der vorhergehenden Ansprüche, **dadurch gekennzeichnet, dass** ein Auslaufstutzen (13) im Bereich des Absperrventils (50) an das Einsatzelement (30) angeformt ist, wobei eine Ringkammer (33) zwischen einer Ausgangsseite des Absperrventils (50) und dem Auslaufnippel (13) ausgebildet ist und wobei das Gehäuse (10) einen zusätzlichen endseitig mündenden Schlitz zur Aufnahme des Auslaufstutzens (13) aufweist.

10. Brausearmatur (100') nach einem der vorhergehenden Ansprüche, **dadurch gekennzeichnet, dass** die Ventileinheiten (40, 50) über Handgriffe (44, 54) bedient werden, die an ihrem dem Gehäuse (10) zugewandten Ende rohrförmig ausgebildet sind, wobei der Innendurchmesser des rohrförmigen Abschnitts der Handgriffe (44, 54) größer ist als der Außendurchmesser des Gehäuses (10) und die rohrförmigen Abschnitte das Gehäuse (10) umfassen.

## Claims

1. A shower mixer (100; 100'), with at least:
- a housing (10) with a hot water feed (21), a cold water feed (31) and a mixed water outlet (13; 13'),
- a shut-off valve unit (50) for shutting off the mixed water outlet (13; 13') and
- a mixing valve unit (60);
**characterized in that** the valve units (50, 60) are each mounted in an insert element (20, 30), the insert elements (20, 30) each having at least one attachment socket (22, 32) integrally moulded thereon, and the housing (10 ; 10') is designed in the form of a pipe sleeve which has at both ends each time at least one axially extending slot (11, 12) in which one of the attachment sockets (22, 32) is received each time.

2. A shower mixer (100 ; 100') according to claim 1, **characterized in that** the insert elements (20, 30) have axially extending water conduit ducts (27, 28, 37, 38) and the water conduit ducts (27, 28, 37, 38) of the insert elements (20, 30) are connected to one another by way of common pipe elements (60, 70).

3. A shower mixer (100) according to claim 1 or 2, **characterized in that** the mixing valve unit is a thermostat valve unit (60).

4. A shower mixer (100) according to any one of claims 1 to 3, **characterized in that** the insert elements (20, 30) are formed from plastics material.

5. A shower mixer (100) according to any one of claims 1 to 4, **characterized in that** the attachment sockets are designed in the form of threaded nipples (22, 32).

6. A shower mixer (100) according to any one of claims 1 to 5, **characterized in that** the pipe elements (60, 70) each have at least one annular seal (61, 62, 71, 72) in the region of the two ends.

7. A shower mixer according to any one of claims 1 to 6, **characterized in that** the pipe elements are each injection moulded at one end into one of the insert elements and they have at least one annular seal at the respective other end.

8. A shower mixer (100') according to any one of claims 1 to 7, **characterized in that** a chamber (15), which is connected to an outlet socket (13') and through which the pipe elements (60, 70) extend, is formed in the housing (10) between the insert elements (20, 30), wherein in one insert element (30) at least one outlet opening (39) leads from the outlet side of the shut-off valve (50) into the chamber (15).

9. A shower mixer (100) according to any one of the preceding claims, **characterized in that** an outlet socket (13) is integrally formed on the insert element (30) in the region of the shut-off valve (50), wherein an annular chamber (33) is formed between an outlet side of the shut-off valve (50) and the outlet nipple (13) and wherein the housing (10) has an additional slot opening at the end in order to receive the outlet socket (13).

10. A shower mixer (100') according to any one of the preceding claims, **characterized in that** the valve units (40, 50) are operated by way of handles (44, 54) which are made tubular at the end thereof facing the housing (10), wherein the internal diameter of the tubular portion of the handles (44, 54) is greater than the external diameter of the housing (10) and embrace the tubular portions of the housing (10).

## Revendications

1. Armature de pommeau de douche (100 ; 100') comportant au moins :
- un boîtier (10) comportant une arrivée d'eau chaude (21), une arrivée d'eau froide (31) et une sortie d'eau mixte (13 ; 13'),
- une unité de soupape d'arrêt (50) servant à fermer la sortie d'eau mixte (13 ; 13') et
- une unité formant un robinet mélangeur (60) ; **caractérisée en ce que** sont logées respectivement dans un élément d'insert (20, 30) les unités de soupape (50, 60), sur lesquelles est moulé au moins un montant de raccordement (22, 32), et **en ce que** le boîtier (10 ; 10') est réalisé comme une douille tubulaire présentant respectivement, sur deux extrémités, au moins une entaille (11, 12) s'étendant axialement, laquelle reçoit respectivement un des montants de raccordement (22, 32).

2. Armature de pommeau de douche (100 ; 100') selon la revendication 1, **caractérisée en ce que** les éléments d'insert (20, 30) présentent des conduites d'eau (27, 28, 37, 38) s'étendant axialement, et **en ce que** les conduites d'eau (27, 28, 37, 38) des éléments d'insert (20, 30) sont reliées entre elles par l'intermédiaire d'éléments tubulaires (60, 70) communs.

3. Armature de pommeau de douche (100) selon la revendication 1 ou 2, **caractérisée en ce que** l'unité formant un robinet mélangeur est une unité formant un robinet mélangeur à thermostat (60).

4. Armature de pommeau de douche (100) selon l'une quelconque des revendications 1 à 3, **caractérisée en ce que** les éléments d'insert (20, 30) sont formés à partir d'une matière synthétique.

5. Armature de pommeau de douche (100) selon l'une quelconque des revendications 1 à 4, **caractérisée en ce que** les supports de raccordement sont réalisés comme des manchons filetés (22, 32).

6. Armature de pommeau de douche (100) selon l'une quelconque des revendications 1 à 5, **caractérisée en ce que** les éléments tubulaires (60, 70) présentent respectivement, dans la zone des deux extrémités, au moins un joint d'étanchéité torique (61, 62, 71, 72).

7. Armature de pommeau de douche selon l'une quelconque des revendications 1 à 6, **caractérisée en ce que** les éléments tubulaires sont injectés respectivement par une extrémité dans un des éléments d'insert et présentent au moins un joint d'étanchéité torique sur l'autre extrémité respective.

8. Armature de pommeau de douche (100') selon l'une quelconque des revendications 1 à 7, **caractérisée en ce qu'**une chambre (15) est réalisée dans le boîtier (10), entre les éléments d'insert (20, 30), laquelle est reliée à un montant de sortie (13') et est traversée par les éléments tubulaires (60, 70), sachant que dans un élément d'insert (30), au moins une conduite de sortie (39) mène depuis le côté sortie de la soupape d'arrêt (50) dans la chambre (15).

9. Armature de pommeau de douche (100) selon l'une quelconque des revendications précédentes, **caractérisée en ce qu'**un montant de sortie (13) est moulé au niveau de l'élément d'insert (30) dans la zone de la soupape d'arrêt (50), sachant qu'une chambre annulaire (33) est réalisée entre un côté sortie de la soupape d'arrêt (50) et le manchon de sortie (13) et sachant que le boîtier (10) présente une entaille supplémentaire débouchant côté extrémité servant à recevoir le montant de sortie (13).

10. Armature de pommeau de douche (100') selon l'une quelconque des revendications précédentes, **caractérisée en ce que** les unités formant soupape (40, 50) sont utilisées par l'intermédiaire de poignées de préhension (44, 54) réalisées de manière tubulaire sur leur extrémité tournée vers le boîtier (10), sachant que le diamètre intérieur de la section tubulaire des poignées de préhension (44, 54) est plus grand que le diamètre extérieur du boîtier (10) et que les sections tubulaires comprennent le boîtier (10).
